(19) Europäisches Patentamt
European Patent Office
Office européen des brevets

(11) **EP 2 982 107 B1**

(12) **EUROPEAN PATENT SPECIFICATION**

(45) Date of publication and mention
of the grant of the patent:
**22.11.2017 Bulletin 2017/47**

(51) Int Cl.:
***H04N 13/00*** *(2006.01)*   ***H04N 13/04*** *(2006.01)*

(21) Application number: **14778062.1**

(22) Date of filing: **04.04.2014**

(86) International application number:
**PCT/US2014/032955**

(87) International publication number:
**WO 2014/165744 (09.10.2014 Gazette 2014/41)**

(54) **RE-TARGETING A THREE-DIMENSIONAL IMAGE SIGNAL**

NEUANVISIERUNG EINES DREIDIMENSIONALEN BILDSIGNALS

RECIBLAGE D'UN SIGNAL TRIDIMENSIONNEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.04.2013 EP 13162505**

(43) Date of publication of application:
**10.02.2016 Bulletin 2016/06**

(73) Proprietors:
• **Koninklijke Philips N.V.
5656 AE Eindhoven (NL)**
• **Dolby Laboratories Licensing Corporation
San Francisco, CA 94103-4813 (US)**

(72) Inventors:
• **BRULS, Wilhelmus, Hendrikus Alfonsus
NL-5656 AE Eindhoven (NL)**
• **DE HAAN, Wiebe
5656 AE Eindhoven (NL)**
• **KROON, Bart
NL-5656 AE Eindhoven (NL)**
• **VANDEWALLE, Patrick, Luc Els
NL-5656 AE Eindhoven (NL)**
• **LAKSHMINARAYANAN, Gopi
San Francisco, CA 94103-4813 (US)**

(74) Representative: **Reints Bok, Wouter
Philips Intellectual Property & Standards
High Tech Campus 5
5656 AE Eindhoven (NL)**

(56) References cited:
**US-A1- 2011 109 720      US-A1- 2011 122 131
US-A1- 2012 084 652      US-A1- 2012 162 200
US-A1- 2013 010 055      US-A1- 2013 069 934**

• **MANUEL LANG ET AL: "Nonlinear disparity
mapping for stereoscopic 3D", ACM
TRANSACTIONS ON GRAPHICS (TOG), ACM, US,
vol. 29, no. 4, 26 July 2010 (2010-07-26), pages
1-10, XP058041092, ISSN: 0730-0301, DOI:
10.1145/1778765.1778812**

**Description**

FIELD OF THE INVENTION

The invention relates to a method for re-targeting a three-dimensional image signal, a method for generating a three-dimensional image signal, a system for re-targeting a three dimensional image signal, a system for generating a three-dimensional image signal, a three-dimensional image signal, a data carrier holding a three-dimensional image signal, a computer program for re-targeting a three-dimensional image signal, a computer program for generating a three-dimensional image signal, a computer program product for storing a computer program for retargeting a three-dimensional image signal and a computer program product for storing a computer program for generating a three-dimensional image signal.

BACKGROUND OF THE INVENTION

Over the last two decades three-dimensional display technology has matured further. Three-dimensional (3D) display devices add a third dimension (depth) to the viewing experience by providing each of the viewer's eyes with different views of the scene that is being watched.

As a result we now have various ways to view three-dimensional image/video signals. On the one hand we have glasses based three-dimensional display system where a user is presented with distinct images for her/his left eye and right eye. On the other hand we have auto-stereoscopic three-dimensional display systems that provide the un-aided eye of a viewer with a three-dimensional view of a scene.

In glasses-based system the active/passive glasses provide a filter for separating the distinct images as presented on the screen for the respective eye of the viewer. In glasses-free or auto-stereoscopic systems the devices quite often are multi-view displays that use light directing means, e.g. in the form of a barrier or lenticular, to direct a left image to the left eye and a right image to the right eye.

In standard 3D cinema glasses are used to separate left and right views for the viewer's eyes. Instead of, for example 24 frames (of image data) per second, in a stereo system 48 frames per second maybe provided; i.e. 24 for the left eye, and 24 for the right eye. The left frames of a stereo pair comprise a slightly different view of the same scene than the right frames. This information is combined by the human brain and results in a perceived three-dimensional image or video.

Examples of systems for processing of three-dimensional images are presented in US2012/162200 which discloses an approach for converting depth values of a depth map dependent on the frequency of depth values in the depth map, and US2103/069934 which discloses modifying depth values to shift salient objects closer to the depth level of a display screen.

One of the cues used to perceive a three-dimensional image, is parallax, i.e. the apparent displacement in apparent position of an object between the two views. A problem that exists with systems that provide three-dimensional image signals is that the parallax information comprised therein is typically optimized for a particular three-dimensional display system/device. As a result the parallax information contained within the signal may not be appropriate for display on another type of three-dimensional display system/device.

Therefore there is a need for adaptation of an input three-dimensional signal to the capabilities of a three-dimensional display device used for displaying the three-dimensional input signal.

SUMMARY OF THE INVENTION

The inventors have observed that in particular for auto-stereoscopic three-dimensional display systems/devices that display a significant depth effect, i.e. when objects between left and right have more pronounced disparities this may result in blurring of the image.

A first aspect of the present invention relates to a method of retargeting three-dimensional video signal data for use on a target three-dimensional display device, the method comprising: receiving the three-dimensional video signal, the three-dimensional video signal in turn comprising three-dimensional video data suitable for driving a multi-view display device, and a reference disparity mapping data, the reference disparity mapping data indicative of a disparity mapping for the three-dimensional video data for a reference three-dimensional display device. The method further comprises deriving a target disparity mapping based on the reference disparity mapping and characteristics of the reference three-dimensional display device and corresponding characteristics of the target three-dimensional display device and retargeting the three-dimensional video data using the target disparity mapping data into a target three-dimensional video data; wherein, provided that the target three-dimensional display device has a larger disparity range for displaying salient elements than the reference three-dimensional display device, the deriving of the target disparity mapping comprises a weighted addition of the reference disparity mapping data and a linear disparity mapping within the larger disparity range; the characteristics of the reference display comprises one of: blur-disparity curve, sharpness-disparity curve, blur-disparity range, sharpness-disparity range, a salient-disparity range, sharpness-disparity data indicative of a disparity range suitable for displaying three-dimensional images with sharpness above a predetermined sharpness metric, and/or blur-disparity data indicative of a disparity range suitable for displaying three-dimensional images with blurring below a predetermined blur measure.

The invention effectively enables an efficient retargeting of the three dimensional video data to a target three-dimensional display device. To this end the present invention includes a reference disparity mapping of a reference three-dimensional display, which may be used by a target three-dimensional display device for retargeting. The reference disparity mapping is dependent on the three-dimensional video data and is preferably time-variable adapting the mapping over time to the image content. The reference mapping may be provided by the content author, whereby it is generated using known characteristics of the reference three-dimensional display device.

In turn at the target three-dimensional display device the corresponding characteristics of the target three-dimensional display device are considered known. These corresponding characteristics may e.g. be available embedded in flash memory, or another non-volatile storage in the target display device, as these characteristics are stable over the display life-time. The display manufacturer, assembler, or another party that has measured/determined such characteristics of the target three-dimensional display device may subsequently store these in the display device.

The target three-dimensional display device may retrieve this data and compare the retrieved data with the characteristics of the reference three-dimensional signal. The present invention allows the use of either one or more standardized display devices, the characteristics of which may also be placed in the non-volatile storage. Using this approach it may suffice to indicate in the three-dimensional video signal which particular standardized reference display the reference disparity mapping is associated with. In case of a single standardized display device, such an indicator may even be redundant.

Alternatively the three-dimensional video signal may comprise the characteristics of the reference three-dimensional display device, thereby providing the system with flexibility and allowing content authors to provide a reference disparity mapping for one or more target display devices.

The target three-dimensional display device may compare the characteristics of the reference three-dimensional display device and its own corresponding characteristics and based thereon decide to generate a target disparity mapping based on the outcome of this comparison and the reference disparity mapping.

As historically three-dimensional display devices over time have achieved better quality 3D output, it is expected that over time the disparity range in which three-dimensional display devices can display content without substantially blurring (e.g. beyond a predetermine blur-metric) will increase. As a result content generated for a current reference display device may not provide the best disparity mapping for a future improved display device, the rationale begin that such content comprises a reference disparity mapping that from an artistic viewpoint best maps the content depth onto the currently available display depth/disparity.

The present invention effectively allows an elegant enhancement, also for future display devices, in that the target three-dimensional display device is provided with the required information to generate a three-dimensional disparity mapping that better suits the target three-dimensional display device.

Notably within the context of the present application depth and disparity are used within the same context. Simplified depth is inversely proportional with disparity and as a result operations in the depth-domain typically have an equivalent in the disparity-domain. Both depth and disparity provide information that relates to image parallax between e.g. a left-eye and a right-eye view of a multi-view (2 or more) video signal.

The three-dimensional image data comprised within the three-dimensional video signal is preferably three-dimensional image data that maybe used to generate multi-view output. The three-dimensional image data may e.g. relate to a single view with an associated depth and/or disparity map suitable for image-based rendering, or more preferably comprises a stereo signal with one or more associated depth maps. The latter signal is beneficial because it allows reproduction of stereo content without loss, but also provides the respective views of the stereo signal information that is useful for filling in de-occluded regions when rendering content for n-view displays where n>2.

Furthermore the present invention may also be used in situations where no explicit depth or disparity information is provided, but where the three-dimensional image signal may provide sufficient context to derive a depth/disparity map therefrom in real-time. For example in case of stereo content without depth map depth/disparity maps can be estimated using well known techniques. However, mileage may vary, in that for certain scenes it may be difficult to accurately derive such a depth/disparity map based on stereo content only.

In a preferred embodiment, the reference disparity mapping is generated using characteristics of the reference three-dimensional display device, such that the reference disparity mapping maps the disparity of salient elements in the three-dimensional video data onto a predetermined disparity range of the reference three-dimensional display device suitable for representing said salient elements.

The advantage of this approach is that for those elements in the three-dimensional image signal that typically require a sharp representation; i.e. with a blur below a predetermined blur threshold, this can actually be provided.

In a more preferred embodiment, provided that the target three-dimensional display device has a larger disparity range for displaying salient elements than the reference three-dimensional display device, the deriving of the target disparity mapping comprises a weighted addition of the reference disparity mapping data and a linear disparity mapping within the larger disparity range.

Using this approach the disparity mapping is brought closer to the ideal unity mapping; i.e. input is output, however the amount of negative and positive disparity used are substantially preserved. In addition it was experimentally confirmed that this method of enhancing provides perceptively pleasing results.

Even more preferably the target disparity mapping corresponds to target_disparity_mapping(x) wherein

$$\text{target\_disparity\_mapping(x)} = ((1\text{-beta}) \cdot \text{reference\_disparity\_mapping(x)}) +$$
$$(\text{beta} \cdot \text{linear\_approximation\_reference\_disparity\_mapping(x)})$$

and wherein

reference_disparity_mapping(x) corresponds to the reference disparity mapping for x
and
finear_approximation_ref_disparity(x) corresponds to a linear disparity mapping through the points (dmin , reference_disparity_mapping(dmin)) and
(dmax, reference_disparity_mapping(dmax)).

The above approach has shown to give good results because it substantially preserves linearity present in the disparity mapping and moreover preserves symmetry present in the input disparity to the output disparity.

The characteristics of the reference three-dimensional display device may preferably comprise one of a blur-disparity range in the form of a curve indicating blur of the display as a function of disparity. Ideally the blur is based on a standardized blur metric so as to improve re-mapping. Alternatively an inverse sharpness disparity curve may be provided. In a simplified system a similar type of information may be provided in the form of a blur-disparity range indicating a preferred disparity range where blur remains minimal. Likewise a sharpness-disparity range may be provided. On account of the generally symmetric nature the blur-range or sharpness range may be characterized using a single disparity value.

A method of generating a three-dimensional video signal, the three-dimensional video signal suitable for retargeting the three-dimensional video signal to a target three-dimensional display device, may comprise obtaining three-dimensional video data suitable for driving a multi-view display device, obtaining characteristics of a reference three-dimensional display device, generating
reference disparity mapping data, the reference disparity mapping data indicative of a disparity mapping for the three-dimensional video data for a reference three-dimensional display device and generating the three-dimensional video signal, wherein generating the three-dimensional video signal comprises combining the three-dimensional video data and the reference disparity mapping data.

The thus generated three-dimensional image signal may function as input to a method according to the first aspect of the invention.

Preferably generating the reference disparity mapping data comprises using the characteristics of the reference three-dimensional display device, such that the reference disparity mapping maps the disparity of salient elements in the three-dimensional video data onto a predetermined disparity range of the reference three-dimensional display device suitable for representing said salient element, this results in the ability of the target three-dimensional display device being capable of better handling disparity for salient elements in the three-dimensional video data.

Notably salient elements correspond to elements such as e.g. faces that in general draw the focus of attention of the viewer, use of artistic blurring aside, such salient objects are preferably represented in a sharp; i.e. un-blurred, manner on a display device.

More preferably generating the three-dimensional video signal comprises combining the three-dimensional video data, the reference disparity mapping data and the characteristics of the reference three-dimensional display device. As a result of this feature there is no longer a need for defining characteristics of one or more reference display devices in target devices, and in case of multiple reference devices there is no longer a need for selecting a reference display device.

Another aspect of the present invention relates to a system for retargeting a three-dimensional video signal for use on a target three-dimensional display device, the system comprising: a receiver arranged to receive the three-dimensional video signal, the three-dimensional video signal comprising: three-dimensional video data suitable for driving a multi-view display device, and reference disparity mapping data, the reference disparity mapping data indicative of a disparity mapping for the three-dimensional video data for a reference three-dimensional display device. The system further comprising a deriver arranged to derive a target disparity mapping based on the reference disparity mapping and characteristics of the reference three-dimensional display device and corresponding characteristics of the target three-dimensional display device; and a converter arranged to retarget the three-dimensional video data using the target disparity mapping data into a target three-dimensional video data; wherein, provided that the target three-dimensional display device (60) has a larger disparity range for displaying salient elements than the reference three-dimensional display device, the deriver is arranged to derive the target disparity mapping involving a weighted addition of the reference disparity mapping data and a linear disparity mapping within the larger disparity range; and the characteristics of the reference display comprises one of: blur-disparity curve, sharpness-disparity curve, blur-disparity range, sharpness-disparity range, a salient-disparity range, sharpness-disparity data indicative of a disparity range suitable for displaying three-dimensional images with sharpness above a predetermined sharpness metric, and/or blur-disparity data indicative of a disparity range suitable for displaying three-dimensional images with blurring below a predetermined blur measure.

A three-dimensional display device may comprise a system for retargeting a three-dimensional video signal as described herein above.

A system for generating a three-dimensional video signal, the three-dimensional video signal suitable for re-targeting the three-dimensional video signal to a target three-dimensional display device, may comprise: a receiver arranged to receive three-dimensional video data suitable for driving a multi-view display device, an acquisition unit arranged to acquire characteristics of a reference three-dimensional display device, a first generator arranged to generate reference disparity mapping data, the reference disparity mapping data indicative of a disparity mapping for the three-dimensional video data for a reference three-dimensional display device and a second generator arranged to generate the three-dimensional video signal, wherein generating the three-dimensional video signal comprises combining the three-dimensional video data and the reference disparity mapping data.

A three-dimensional video signal, the three-dimensional video signal suitable for retargeting the three-dimensional video signal to a target three-dimensional display device, may comprise: three-dimensional video data suitable for driving a multi-view display device and reference disparity mapping data, the reference disparity mapping data indicative of a disparity mapping for the three-dimensional video data for a reference three-dimensional display device.

The present invention further relates to a computer program for retargeting a three-dimensional video signal, the computer program comprising instructions for executing a retargeting method as described above.

A computer program for generating a three-dimensional video signal, may comprise instructions for executing a generation method as described above.

The present invention may further relate to a data carrier comprising the three-dimensional video signal described above, a data carrier comprising the computer program for retargeting described above or a data carrier comprising the computer program for generating as described above. Examples of suitable data carriers are data carriers that provide non-volatile storage capabilities such as an optical disc, a hard-disc or a solid-state storage device.

These and other aspects, features and advantages of the invention will be apparent from and elucidated with reference to the embodiment(s) described hereinafter.

BRIEF DESCRIPTION OF THE DRAWINGS

Embodiments of the invention will be described, by way of example only, with reference to the drawings, in which

Fig. 1, shows a graph depicting a curve of blur versus display disparity of a reference three-dimensional display device,
Fig. 2, shows a graph depicting a curve of blur versus display disparity curve of a target three-dimensional display device,
Fig. 3, shows a graph illustrating the derivation of a target disparity mapping based on a reference disparity mapping and a comparison of characteristics of a reference and a target three-dimensional display device,
Fig. 4, shows a flow-chart of a method of generating a three-dimensional video signal,
Fig. 5, shows a block-diagram of a system for generating a three-dimensional video signal,
Fig. 6, shows a flow-chart of a method of retargeting a three-dimensional video signal for use on a target three-dimensional display device,
Fig. 7, block-diagram of a system for retargeting a three-dimensional video signal for use on a target three-dimensional display device, and wherein
Fig. 8, shows a graphical representation illustrating the path from depth to output/display disparity values.

DETAILED DESCRIPTION OF SOME EMBODIMENTS OF THE INVENTION

The inventors of the present invention propose to add metadata to a three-dimensional video signal in order to enable the re-targeting or re-mapping of the three-dimensional video data contained therein for rendering on a target three-dimensional display device.

The inventors realized that content typically is authored by content authors for an ideal display device that can render the three-dimensional video signal as it was intended from an artistic point of view. However in practice when such content is to be rendered on a practical display device this is not always feasible. As a result the disparity in the three-dimensional video may have to be remapped. The manner in which this should be done may not be apparent or easily determined at a target display device.

To address this issue the inventors propose to add metadata for a reference three-dimensional display device to the three-dimensional image signal. This metadata is based on the one hand on the actual three-dimensional video data contained in the image signal. On the other hand it is based on characteristics of the display device.

A target 3D display device arranged for using the present invention will need to be aware of its own capabilities. These capabilities will typically be made available by the manufacturer of the device to the retargeting software. The information may be made available in a non-volatile storage, or using a ROM or other permanent storage. Using this information the target display device can relate its characteristics to that of the reference 3D display device.

When the target 3D display device receives a three-dimensional signal according to the present invention, the 3D display device will need to relate the characteristics of the reference 3D device to its own characteristics. To this end all target display devices may be provided with characteristics of one or more reference display devices, or alternatively such characteristics may be included in the three-dimensional image signal.

Once the target three-dimensional display device has both characteristics available it can make an assessment as to whether or not it is possible to obtain an improved disparity mapping based on the reference disparity mapping.

For example, consider the situation wherein the target 3D display device knows its own blur-disparity relation; i.e. the target 3D display device knows the range of display disparity in luminance pixels that can be displayed with a blur measure remaining below a predetermined threshold. Next consider the situation that the target 3D display device receives a three-dimensional image signal that comprises three-dimensional data and an accompanying reference disparity mapping for a reference 3D display device together with the blur-disparity relation of the reference 3D display device.

Next the target 3D display device may compare its blur-disparity relation with that of the reference 3D display device.

In one scenario the blur-disparity relation may be condensed in a single symmetrical disparity range; i.e. into a Salient disparity range. The salient disparity range corresponds with the disparity range where ideally salient elements of the three-dimensional video data are mapped. When salient objects are mapped such that their disparity falls within this disparity range, the salient object will remain sharp.

When the salient disparity range of the target 3D display device is bigger than that of the reference 3D display device, and the reference disparity mapping shows significant "companding", there may be room to derive a better quality disparity mapping.

It is an insight of the inventors that it is beneficial to more closely approximate the original identity curve (input disparity=output disparity), but to preserve linearity of the reference disparity mapping.

To this end the inventors propose a target disparity mapping that comprises a weighted addition of the reference disparity mapping data and a linear disparity mapping within the larger disparity range.

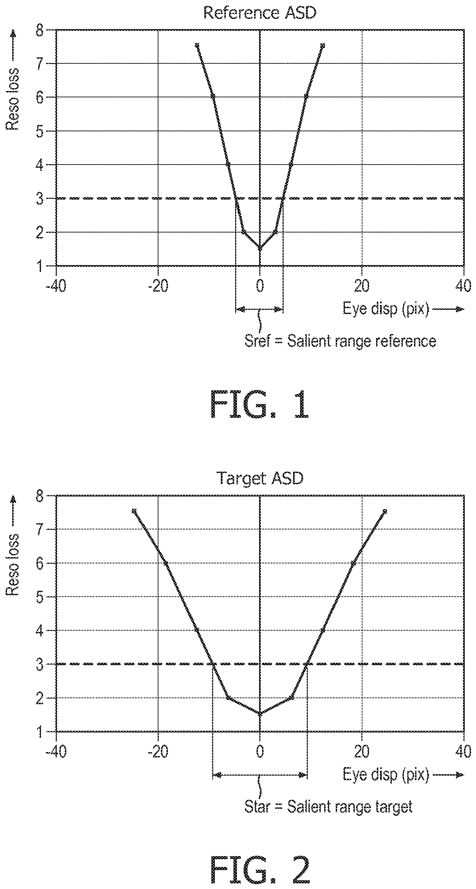

Fig. 1 shows a graph of a blur curve of a reference 3D display device, on the horizontal axis we see the display disparity in luminance pixels. On the vertical axis we see a blur measure. The dashed line at the blur level 3 indicates that the reference 3D display device has a relatively narrow salient disparity range. That is salient objects should be mapped onto the disparity range that corresponds with the disparity range where the curve is below the threshold. This range may be referred to as the saliency disparity range, as it is the disparity range where the salient image elements should be mapped in order to remain substantially sharp, in other words where the frequency loss (or blurring) is below a certain threshold value.

Fig. 2 depicts a graph of a blur curve of a target 3D display device. Notably the salient range of the target 3D display device is significantly wider than that of the reference 3D display device. This implies that the target 3D display device has a broader disparity range for the salient objects.

In the present example the ratio between the saliency range of the target 3D display device and the reference 3D display device is a factor 2.

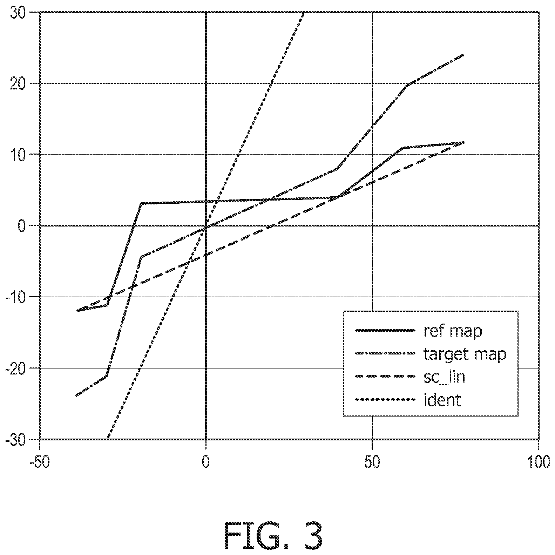

Fig. 3 illustrates how a disparity mapping as provided for the reference 3D display device may be enhanced using the present invention. The thin black line in Fig. 3 represents the reference disparity mapping as received in combination with three-dimensional video data in a three-dimensional image signal. As can be seen from the graph the reference mapping is rather flat; i.e. the full range of the input disparity is mapped onto a fairly narrow output range. The figure also shows a thin dotted line corresponding with the identity curve.

It is an insight of the inventors that when remapping preferably the linearity of the reference map should be preserved as much as possible. However, if there is room available the curve should be brought closer to the ideal mapping; i.e. towards the identity curve.

A particularly advantageous manner to do so is to derive an improvement factor based on the salience disparity ranges of the reference and target display devices and to use this improvement factor to perform a weighted addition of the reference disparity mapping and a linear approximation of the reference disparity mapping. This improvement factor is referred to as alpha.

$$alpha = Star/Sref$$

For values of alpha larger than 1 we preferably enhance the reference disparity mapping as follows:

$$beta = 1/alpha$$

$$target\_disparity\_mapping(x) =$$

$$((1\text{-}beta) \cdot reference\_disparity\_mapping(x)) +$$

$$(beta \cdot linear\_approximation\_reference\_disparity\_mapping(x))$$

and wherein

reference_disparity_mapping(x) corresponds to the reference disparity mapping for x and linear_approximation_ref_disparity(x) corresponds to a linear disparity mapping through the points (dmin, reference_disparity_mapping(dmin)) and (dmax , reference_disparity_mapping(dmax)).

The advantage of this way of working is that the display disparities remain symmetrically distributed (vertically) for the whole input content disparity range. This is important because the blur relation is symmetrical for positive and negative display disparities.

For values of alpha that are smaller than one, mixing should be handled such that the variation around the then downscaled linear approximation linear_approximation_ref_disparity(x) should remain symmetrical.

Alternatively, mixing may be performed with a zero display disparity curve, in other words the target disparity mapping is adapted in vertical direction, by scaling using alpha.

Notably further improvements are possible by deriving a smooth curve; e.g. the target device could derive a smooth continuous curve from the resulting disparity mapping by applying cubic Hermite splines using three-point difference for internal points and one-sided difference at the end points and preserve monotonicity by applying the Fritch-Carlson method.

As an aside it is noted that saliency detection in video has received considerable attention and a wide range of efficient saliency detection mechanism are known. For the sake of completeness a reference to "Salient Object Detection: A Benchmark, by Ali Borji et al", is provided which was downloaded fromhttp://ilab.usc.edu/-borji/papers/paperBorji.pdf
this document comprises a comparison of 35 state-of-the-art saliency detection models.

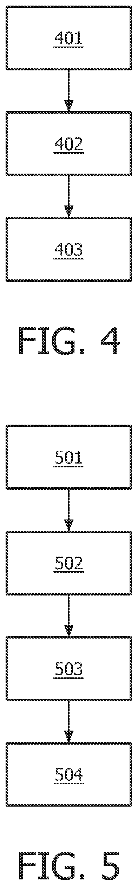

Figure 4 shows a simplified flow-chart of a method of retargeting three-dimensional video signal data for use on a target three-dimensional display device. The method comprises a step 401 in which the three-dimensional video signal is received, the three-dimensional video signal comprising: three-dimensional video data suitable for driving a multi-view display device and reference disparity mapping data. The reference disparity mapping data is indicative of a disparity mapping for the three-dimensional video data for a reference three-dimensional display device. The method further comprises the step 402 of deriving a target disparity mapping based on the reference disparity mapping and characteristics of the reference three-dimensional display device and corresponding characteristics of the target three-dimensional display device. As indicated herein before the characteristics of the target three-dimensional display device are available to the target display device and may be either stored in the device itself or may be accessible on request; e.g. they may be downloadable to the device. The characteristics of the reference device in turn may also be pre-distributed and embedded in the target device, or may be provided within the three-dimensional image signal itself.

The method further comprises a step 403 of retargeting the three-dimensional video data using the target disparity mapping data into a target three-dimensional video data. In the event the input three-dimensional video data comprises content in a so-called image and depth format, the retargeting may comprise generating an image and accompanying on-screen disparity. Alternatively when image based rendering is included this may also involve image-based rendering in order to generate a multi-view image signal having the proper on-screen disparity.

Figure 5 shows a simplified flow-chart of a method of generating a three-dimensional video signal, the three-dimensional video signal suitable for retargeting the three-dimensional video signal to a target three-dimensional display device. The method comprises a step 501 for obtaining three-dimensional video data suitable for driving a multi-view display device and a step 502 for obtaining characteristics of a reference three-dimensional display device. As there is no direct interdependency between these two steps, they may off course be executed in parallel or in reverse order.

The method further comprises a step 503 for generating reference disparity mapping data, the reference disparity mapping data indicative of a disparity mapping for the three-dimensional video data for a reference three-dimensional display device and a step 504 for generating the three-dimensional video signal, wherein generating the three-dimensional video signal comprises combining the three-dimensional video data and the reference disparity mapping data.

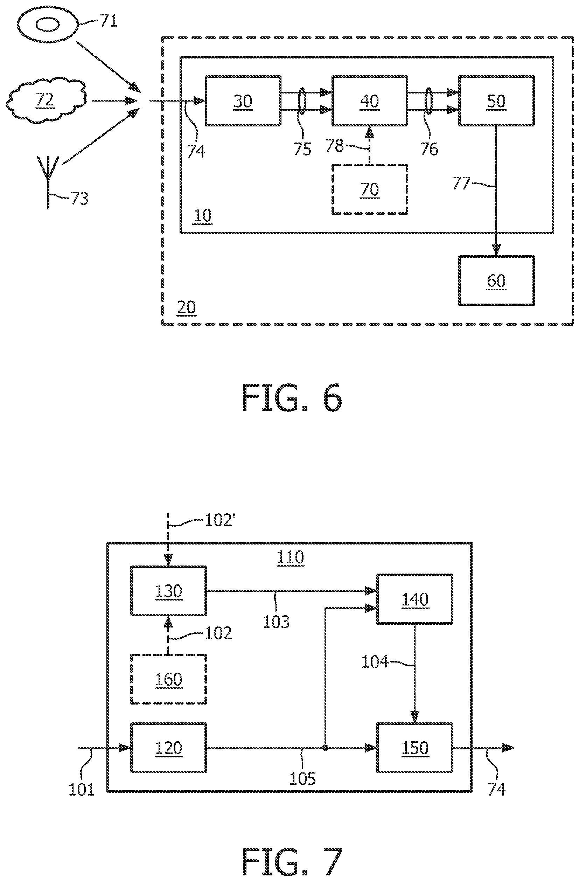

Figure 6 shows a system 10 for retargeting a three-dimensional video signal 74 for use on a target three-dimensional display device 60. The system 10 comprises a receiver 30 arranged to receive the three-dimensional video signal 74. The three-dimensional video signal can be originate from a data carrier 71, such as an optical disc, a hard disk or non-volatile solid state storage device. Alternatively the three dimensional video signal maybe received over a network connection 72, or over a wireless interface 73, which may possibly be a broadcast interface.

The three-dimensional video signal 74 comprises three-dimensional video data suitable for driving a multi-view display device, and reference disparity mapping data. The reference disparity mapping data is indicative of a disparity mapping for the three-dimensional video data for a reference three-dimensional display device (not shown). In the block diagram the information is de-multiplexed and transmitted to a deriver 40. The deriver is arranged to derive a target disparity mapping based on the reference disparity mapping and characteristics of the reference three-dimensional display device and corresponding characteristics of the target three-dimensional display device. To this end the deriver may retrieve part or all of the characteristic data 78 from non-volatile storage 70, or may alternatively obtain the characteristics of the reference device from the de-multiplexed three-dimensional image signal 75.

Once the target disparity mapping has been computed the target disparity mapping data together with the three-dimensional video data is transmitted to a converter 50 arranged to retarget the three-dimensional video data using the target disparity mapping data into a target three-dimensional video data 77. The target three-dimensional video data 77 in turn maybe transmitted to a target display 60.

Notably the invention also envisages an integrated target three-dimensional display device 20 comprising the target display 60 and the integrated retargeting system 10.

Although in the exemplary devices shown, the three-dimensional video data is transmitted in conjunction with the reference disparity mapping data, it will be clear to those skilled in the art, that alternatively the three-dimensional video data can also bypass the deriver 60 and be transferred from the receiver 30 to the converter 50 directly.

Figure 7 shows a system 110 for generating a three-dimensional video signal 74, the three-dimensional video signal being suitable for retargeting to a target three-dimensional display device. The system to this end comprises a receiver 120 arranged to receive three-dimensional video data 101 suitable for driving a multi-view display device. The system further comprises an acquisition unit 130 arranged to acquire characteristics 102 of a reference three-dimensional display device. To this end the system 110 may comprise a non-volatile storage 160 comprising the characteristics 102 of the reference three-dimensional display device in case the generator is used for generating content for a particular type of display devices. Alternatively these characteristics 102' may originate from an external source.

The system 110 further comprises a first generator 140 arranged to generate reference disparity mapping data 104, the reference disparity mapping data 104 is indicative of a disparity mapping for the three-dimensional video data 105 for a reference three-dimensional display device. The first generator 140 is arranged to receive the characteristics 103 as transmitted by the acquisition unit 130 as well as the three-dimensional video data 105 as received by the receiver 120.

The system 110 further comprises a second generator 150 arranged to generate the three-dimensional video signal 74, wherein generating the three-dimensional video signal 74 comprises combining the three-dimensional video data 105 and the reference disparity mapping data 104 as received from the first generator.

**Metadata encoding for video image signals**

When generating a video image signal, it is possible to encode additional information in so-called SEI messages. SEI messages may for example be added in to AVC (ISO/IEC 14496-10:2012 - Information technology - Coding of audio-visual objects - Part 2 10: Advanced Video Coding) or HEVC (ISO/IEC 23008-2:201x/FDIS - Information technology - High efficiency coding and media 13 delivery in heterogeneous environments - Part 2: High efficiency video coding) based video sequences. Such metadata may be used to provide additional data to re-target the video image signal. Transmission of metadata elements across device interconnection links (such as in HDMI) can also be accommodated for.

Preferably metadata is comprised in user data unregistered SEI messages. More preferably these SEI messages are included in the elementary stream that contains the depth or disparity information that is provided together with the three-dimensional video data.

Dependent on the manner of transport the depth can be transmitted in a single elementary stream with video and depth or disparity or alternatively as a separate disparity/depth elementary stream depending on the preferred manner of transport.

An example of the SEI metadata message container syntax is provided below.

Table 1, SEI metadata message container syntax.

| user_data_unregistered(payloadSize) { | C | Descriptor |
|---|---|---|
| **uuid_xxxx** | 5 | u(128) |
| **metadata_type** | 5 | u(8) |
| metadataSize = payloadSize - 17 | | |
| if(metadata_type = = 0) | | |
| depth_processing_information(metadataSize) | | |
| else if(metadata_type = = 1) | | |
| view_rendering_assist_information(metadataSize) | | |
| else | | |
| for(i = 0; i < metadataSize; i++) | | |
| **reserved_metadata_byte** | 5 | b(8) |
| } | | |

Notably, here uuid_xxxx can be used as an identifier to indicate the type of metadata, so as to allow an application parsing the incoming data to recognize the metadata and take appropriate action so as to retarget the three-dimensional video image signal based on the information provided. In turn the metadata_type field can be used to provide additional information on the type of metadata comprised in the SEI message container.

**Depth/disparity processing information**

Advantageously we can use the SEI metadata to provide additional information related to the reference disparity mapping, or for the characteristics of the reference three dimensional display device.

SEI messages can be inserted in the stream at frame accurate positions and thus can be used to accurately adjust the disparity mapping when needed. This information may also be referred to as depth/disparity processing information.

The depth processing information message, when present in the coded video sequence, is recommended to be at least included with every IDR access unit (=Instantaneous Decoding Refresh access unit. This way it may be updated as needed with any access unit and is valid until the next access unit.

The depth processing information message may be used to provide depth format information and information on how depth should be remapped to displays with limited depth. Off course care should be taken so that information contained in these messages is kept consistent with possibly overlapping information in other SEI messages that may be included for consistency with other functions.

The depth format information includes parameters that enable the display device to convert depth map data to disparity values in pixels. By including the depth processing information with the coded video, the content owner/creator has the possibility to optimize the mapping from depth map values to disparity values for the receiving display without the need to have detailed knowledge about the characteristics of all possible target displays.

Part of the depth processing information may be updated with frame accuracy if desired, e.g. when salient objects are moving towards or away from the viewer. Remapping information may be included in the signal/bitstream by means of a curve that defines the relation between input disparity values and output values that relate to disparity on target displays with a limited depth range.

Of course several types of remapping maybe used side-by-side. For example for simple devices a simple fixed disparity mapping such as a linear scaling maybe defined. However in more advanced systems and where such data is available a mapping in-line with the present invention maybe utilized.

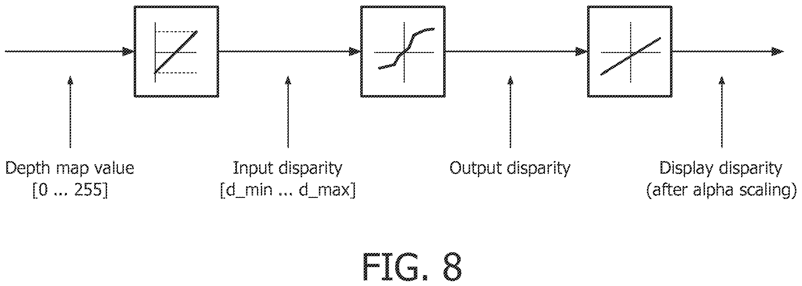

Fig. 8 shows a graphical representation of the path from depth, to input/content disparity to output disparity and from output disparity to display disparity. First an input/content depth value, here in the range of [0..255], is mapped onto an input/content disparity value in the range [dmin..dmax]. Based upon the "blur characteristics" of the reference and target 3D display device the improvement is achieved by applying a transformation to the result of the reference disparity mapping.

In the case of fixed blur model remapping, it is assumed that the target three-dimensional display device the perceived horizontal resolution degrades with increasing disparity following a more or less similar degradation model.

For these displays the horizontal resolution degradation as a function of disparity can be characterized by a single parameter alpha. Alpha values of the displays are required to be determined by the manufacturer according to a standardized method.

The alpha value of the reference display that was used to determine the curve is included with the metadata. The target display device applies the curve and scales the output values in a linear fashion, depending on the ratio between the alpha of the reference display and the target display. As a result the sharpness degradation on the target device more or less resembles that on the reference device.

As the disparity scaling is linear, any curve applied to the original disparities by the content author, that is any mapping applied in the studio representing the artistic intent, is not affected.

An example of the syntax of the coding of a blur curve is provided in Table 2 below.

Table 2, Depth processing information syntax

| depth_processing_information(metadataSize) { | C | Descriptor |
|---|---|---|
| ... | | |
| **depth_coding_format** | 5 | u(4) |
| **...** | | |
| **depth_source_type** | 5 | u(4) |
| **...** | | |
| **depth_representation** | 5 | u(4) |
| ... | | |
| **d_min** | 5 | i(12) |
| **d_max** | 5 | i(12) |
| **...** | | |
| **remapping_type** | 5 | u(4) |
| **num_curve_nodes** | 5 | u(4) |
| for(j = 0; j < **num_curve_nodes**; j++) { | | |
| i = i + 3 | | |
| **disparity_in**[j] | 5 | i(12) |
| **curve_out**[j] | 5 | i(12) |
| } | | |
| ... | | |
| while(i < metadataSize) { | | |
| **reserved_depth_processing_information_byte** | 5 | b(8) |
| i++ | | |
| } | | |
| } | | |

In table 2, the depth_coding_format indicates the manner in which depth is included in the bitstream. The depth_source_type in turn may specify the source of the content; which may e.g. indicate whether or not the content is CGI content, professional movie content, off line product broadcast content, or real-time broadcast content. In this manner the nature of the input content is clear and allows conclusions to be drawn based on the possible quality of the depth and/or e.g. whether scene changes are accurately detectable/encoded.

The depth_representation value defines the meaning of how depth information is encoded; e.g. the depth_representation can indicate that the depth is uniformly quantized 0-255 inclusive in case of an 8-bit value. Alternatively it may be indicated that disparity values are being used instead of depth values.

In case depth values are being used in the input format, then preferably d_min defines the input disparity value in luminance pixels of the texture view that corresponds with decoded depth value 0. Notably here input disparity corresponds to the disparity as envisioned by the content author, so this disparity may also be referred to as content disparity. Preferably negative values of d_min correspond to virtual locations in front of the screen. At the same time preferably d_max defines the input disparity value in luminance pixels of the texture view that corresponds with decoded depth value 255. So logically d_max is greater than d_min and together d_min and d_max define the disparity range to which depth value should be uniformly mapped/.

Alternatively when disparity values are being used there is no need for providing information on mapping depth to input/content disparity.

The remapping type in turn may be used to indicate whether a fixed blur model remapping should be used or whether another remapping method should be used.

The disparity remapping may be represented using a number of nodes as indicated in Table 2. When the num_curve_nodes is unequal to 0 this indicates that a (nonlinear) remapping should be applied to the input/content disparity values according to a remapping curve to optimize presentation of the 3D video content on an autostereoscopic display with a limited depth range.

This field specifies the number of nodes that is included in the metadata to define the remapping curve. This field should be set to 0 if remapping_type is set to fixed blur. In turn disparity_in[j] defines the input disparity value of the j-th node of the remapping curve. The nodes included in the metadata have increasing input disparity values. The first input disparity value has to be greater than or equal to the value of d_min. The last input disparity value has to be smaller than or equal to d_max.

curve_out[j] in turn defines the output value of the j-th node of the curve. The curve out values should increase with increasing j.

The target device should derive a smooth continuous curve from the nodes by applying cubic Hermite splines using three-point difference for internal points and one-sided difference at the end points and preserve monotonicity by applying the Fritch-Carlson method.

Although the present invention has been described with reference to a three-dimensional image signal, wherein depth and/or disparity input was explicitly provided, it is noted that the present invention may also be used for retargeting stereoscopic of multi-view content in the absence of depth or disparity data, provided that a reference disparity mapping and characteristics of the reference and target 3D display devices are available.

In the case of missing depth or disparity data, depth or disparity data can be estimated based on the stereo and/or multi-view content and one or more new views taking into account the remapped disparity maybe rendered using well known image based rendering techniques.

In short the present invention may be used to map input depth and/or disparity data onto output or display disparity data in an advantageous manner. The present invention is particularly useful for autostereoscopic multi-view display devices as these typically have a more limited disparity range that can be utilized.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc. do not preclude a plurality. Reference signs in the claims are provided merely as a clarifying example shall not be construed as limiting the scope of the claims in any way.

**Claims**

1. Method of retargeting three-dimensional video signal data for use on a target three-dimensional display device (60), the method comprising:

   - receiving (401) the three-dimensional video signal, the three-dimensional video signal comprising:
   - three-dimensional video data suitable for driving a multi-view display device,
   - reference disparity mapping data, the reference disparity mapping data indicative of a disparity mapping for the three-dimensional video data for a reference three-dimensional display device;
   - deriving (402) a target disparity mapping based on the reference disparity mapping and characteristics of the reference three-dimensional display device and corresponding characteristics of the target three-dimensional display device (60)
   - retargeting (403) the three-dimensional video data using the target disparity mapping data into a target three-dimensional video data

   wherein, provided that the target three-dimensional display device (60) has a larger disparity range for displaying salient elements than the reference three-dimensional display device, the deriving (402) of the target disparity mapping comprises a weighted addition of the reference disparity mapping data and a linear disparity mapping within the larger disparity range; and the characteristics of the reference three-dimensional display device comprises one of:

   - blur-disparity curve,
   - sharpness-disparity curve,
   - blur-disparity range,
   - sharpness-disparity range,
   - a salient-disparity range,
   - sharpness-disparity data indicative of a disparity range suitable for displaying three-dimensional images with sharpness above a predetermined sharpness metric, and/or
   - blur-disparity data indicative of a disparity range suitable for displaying three-dimensional images with blurring below a predetermined blur measure.

2. The method of claim 1, wherein the target disparity mapping corresponds to

$$\text{target\_disparity\_mapping}(x) \text{ and wherein the target\_disparity\_mapping}(x) =$$
$$((1\text{-beta}) \cdot \text{reference\_disparity\_mapping}(x)) +$$
$$(\text{beta} \cdot \text{linear\_approximation\_reference\_disparity\_mapping}(x))$$

   and wherein

   reference_disparity_mapping(x) corresponds to the reference disparity mapping for x and linear_approximation_ref_disparity(x) corresponds to a linear disparity mapping through the points (dmin, reference_disparity_mapping(dmin)) and (dmax, reference_disparity_mapping(dmax)).

3. The method of claim 1, wherein the reference disparity mapping is generated using characteristics of the reference three-dimensional display device, such that the reference disparity mapping maps the disparity of salient elements in the three-dimensional video data onto a predetermined disparity range of the reference three-dimensional display device suitable for representing said salient elements.

4. The method of anyone of claims 1-3, wherein the three-dimensional video signal further comprises the characteristics of the reference three-dimensional display device used in the deriving.

5. The method according to any one of the claims 1-3, further comprising generating the three-dimensional video signal by:

   - obtaining three-dimensional video data suitable for driving the multi-view display device,
   - obtaining the characteristics of the reference three-dimensional display device,
   - generating the reference disparity mapping data, the reference disparity mapping data indicative of the disparity mapping for the three-dimensional video data for the reference three-dimensional display device and
   - generating the three-dimensional video signal, wherein generating the three-dimensional video signal comprises combining the three-dimensional video data and the reference disparity mapping data.

6. System for retargeting a three-dimensional video signal for use on a target three-dimensional display device (60), the system comprising:

   - a receiver (30) ranged to receive the three-dimensional video signal, the three-dimensional video signal comprising:

      - three-dimensional video data suitable for driving a multi-view display device, and
      - reference disparity mapping data, the reference disparity mapping data indicative of a disparity mapping for the three-dimensional video data for a reference three-dimensional display device;

   - a deriver (40) arranged to derive a target disparity mapping based on the reference disparity mapping and characteristics of the reference three-dimensional display device and corresponding characteristics of the target three-dimensional display device (60); and
   - a converter (50) arranged to retarget the three-dimensional video data using the target disparity mapping data into a target three-dimensional video data;

   wherein, provided that the target three-dimensional display device (60) has a larger disparity range for displaying salient elements than the reference three-dimensional display device, the deriver is arranged to derive the target disparity mapping involving a weighted addition of the reference disparity mapping data and a linear disparity mapping within the larger disparity range;
   and the characteristics of the reference three-dimensional display device comprises one of:

      - blur-disparity curve,
      - sharpness-disparity curve,
      - blur-disparity range,
      - sharpness-disparity range,
      - a salient-disparity range,
      - sharpness-disparity data indicative of a disparity range suitable for displaying three-dimensional images with sharpness above a predetermined sharpness metric, and/or
      - blur-disparity data indicative of a disparity range suitable for displaying three-dimensional images with blurring below a predetermined blur measure.

7. The system of claim 6, wherein the target disparity mapping corresponds to

$$\text{target\_disparity\_mapping}(x) \text{ and wherein the target\_disparity\_mapping}(x) =$$

$$((1\text{-beta}) \cdot \text{reference\_disparity\_mapping}(x)) +$$

$$(\text{beta} \cdot \text{linear\_approximation\_reference\_disparity\_mapping}(x))$$

and wherein
reference_disparity_mapping(x) corresponds to the reference disparity mapping for x and linear_approximation_ref_disparity(x) corresponds to a linear disparity mapping through the points (xmin, reference_disparity_mapping(xmin)) and
(xmax, reference_disparity_mapping(xmax)).

8. The system of claim 6, wherein the reference disparity mapping is generated using characteristics of the reference three-dimensional display device, such that the reference disparity mapping maps the disparity of salient elements in the three-dimensional video data onto a predetermined disparity range of the reference three-dimensional display device suitable for representing said salient elements.

9. The system of anyone of claims 6-8, wherein the three-dimensional video signal further comprises the characteristics of the reference three-dimensional display device used by the deriver (40).

10. A three-dimensional display device comprising anyone of the systems of claim 6-8.

11. A supra-system comprising anyone of the systems of claim 6-8, the supra-system further comprising a system for generating a three-dimensional video signal, the system for generating the three-dimensional video signal comprising:

- a receiver (120) arranged to receive three-dimensional video data suitable for driving the multi-view display device,
- an acquisition unit (130) arranged to acquire characteristics of the reference three-dimensional display device,
- a first generator (140) arranged to generate the reference disparity mapping data, the reference disparity mapping data indicative of the disparity mapping for the three-dimensional video data for the reference three-dimensional display device, and
- a second generator (150) arranged to generate the three-dimensional video signal, wherein generating the three-dimensional video signal comprises combining the three-dimensional video data and the reference disparity mapping data.

12. A computer program for retargeting a three-dimensional video signal, the computer program comprising instructions which, when the program is executed by a computer, cause the computer to carry out anyone of the method of claim 1-3.

13. A computer-readable data carrier having stored thereon the computer program of claim 12.

**Patentansprüche**

1. Verfahren zur Retargetierung dreidimensionaler Videosignaldaten zur Verwendung auf einer dreidimensionalen Zielanzeigeeinrichtung (60), wonach:

- das dreidimensionale Videosignal empfangen wird (401), wobei das dreidimensionale Videosignal umfasst:

- dreidimensionale Videodaten, die zur Ansteuerung einer Multiview-Anzeigeeinrichtung geeignet sind,
- Referenz-Disparitätsabbildungsdaten, wobei die Referenz-Disparitätsabbildungsdaten für eine Disparitätsabbildung für die dreidimensionalen Videodaten für eine dreidimensionale Referenzanzeigeeinrichtung bezeichnend sind;

- eine Zieldisparitätsabbildung aufgrund der Referenz-Disparitätsabbildung und Charakteristiken der dreidimensionalen Referenzanzeigeeinrichtung sowie entsprechenden Charakteristiken der dreidimensionalen Zielanzeigeeinrichtung (60) abgeleitet wird (402);
- die dreidimensionalen Videodaten unter Verwendung der Zieldisparitätsabbildungsdaten in dreidimensionale Zielvideodaten retargetiert werden (403),

wobei, vorausgesetzt, dass die dreidimensionale Zielanzeigeeinrichtung (60) einen größeren Disparitätsbereich zur Darstellung salienter Elemente als die dreidimensionale Referenzanzeigeeinrichtung aufweist, das Ableiten (402) der Zieldisparitätsabbildung eine gewichtete Addition der Referenz-Disparitätsabbildungsdaten und einer linearen Disparitätsabbildung innerhalb des größeren Disparitätsbereichs umfasst; und wobei die Charakteristiken der dreidimensionalen Referenzanzeigeeinrichtung eine(einen) der folgenden umfassen:

- Unschärfe-Disparitätskurve,
- Schärfe-Disparitätskurve,
- Unschärfe-Disparitätsbereich,
- Schärfe-Disparitätsbereich,
- einen Salient-Disparitätsbereich,

- Schärfe-Disparitätsdaten, die für einen Disparitätsbereich bezeichnend sind, der zur Darstellung dreidimensionaler Bilder mit einer Schärfe oberhalb einer vorgegebenen Schärfemetrik geeignet ist, und/oder
- Unschärfe-Disparitätsdaten, die für einen Disparitätsbereich bezeichnend sind, der zur Darstellung dreidimensionaler Bilder mit einer Unschärfe unterhalb eines vorgegebenen Unschärfemaßes geeignet ist.

2. Verfahren nach Anspruch 1, wobei die Zieldisparitätsabbildung

$$\text{target\_disparity\_mapping(x)} \text{ entspricht, und wobei die target\_disparity\_mapping(x)} =$$

$$((\text{l-beta}) \cdot \text{reference\_disparity\_mapping(x)}) +$$

$$(\text{beta} \cdot \text{linear\_approximation\_reference\_disparity\_mapping(x)})$$

und wobei

reference_disparity_mapping(x) der Referenz-Disparitätsabbildung für x entspricht und linear_approximation_ref_disparity(x) einer linearen Disparitätsabbildung durch die Punkte (dmin, reference_disparity_mapping(dmin)) und
(dmax, reference_disparity_mapping(dmax)) entspricht.

3. Verfahren nach Anspruch 1, wobei die Referenz-Disparitätsabbildung unter Verwendung von Charakteristiken der dreidimensionalen Referenzanzeigeeinrichtung erzeugt wird, so dass die Referenz-Disparitätsabbildung die Disparität salienter Elemente in den dreidimensionalen Videodaten auf einen vorgegebenen Disparitätsbereich der dreidimensionalen Referenzanzeigeeinrichtung abbildet, die zur Darstellung der salienten Elemente geeignet ist.

4. Verfahren nach einem der Ansprüche 1-3, wobei das dreidimensionale Videosignal weiterhin die bei der Ableitung verwendeten Charakteristiken der dreidimensionalen Referenzanzeigeeinrichtung umfasst.

5. Verfahren nach einem der Ansprüche 1-3, wonach weiterhin das dreidimensionale Videosignal erzeugt wird, indem:

- dreidimensionale Videodaten erhalten werden, die zur Ansteuerung der Multiview-Anzeigeeinrichtung geeignet sind,
- die Charakteristiken der dreidimensionalen Referenzanzeigeeinrichtung erhalten werden,
- die Referenz-Disparitätsabbildungsdaten erzeugt werden, wobei die Referenz-Disparitätsabbildungsdaten für die Disparitätsabbildung für die dreidimensionalen Videodaten für die dreidimensionale Referenzanzeigeeinrichtung bezeichnend sind, und
- das dreidimensionale Videosignal erzeugt wird, wobei das Erzeugen des dreidimensionalen Videosignals das Kombinieren der dreidimensionalen Videodaten und der Referenz-Disparitätsabbildungsdaten umfasst.

6. System zur Retargetierung eines dreidimensionalen Videosignals zur Verwendung auf einer dreidimensionalen Zielanzeigeeinrichtung (60), wobei das System umfasst:

- einen Empfänger (30), der zum Empfang des dreidimensionalen Videosignals eingerichtet ist,
- dreidimensionale Videodaten, die zur Ansteuerung einer Multiview-Anzeigeeinrichtung geeignet sind, sowie
- Referenz-Disparitätsabbildungsdaten, wobei die Referenz-Disparitätsabbildungsdaten für eine Disparitätsabbildung für die dreidimensionalen Videodaten für eine dreidimensionale Referenzanzeigeeinrichtung bezeichnend sind;
- einen Ableiter (40), der zum Ableiten einer Zieldisparitätsabbildung aufgrund der Referenz-Disparitätsabbildung und Charakteristiken der dreidimensionalen Referenzanzeigeeinrichtung sowie entsprechenden Charakteristiken der dreidimensionalen Zielanzeigeeinrichtung (60) eingerichtet ist; sowie
- einen Umsetzer (50), der zur Retargetierung der dreidimensionalen Videodaten unter Verwendung der Zieldisparitätsabbildungsdaten in dreidimensionale Zielvideodaten eingerichtet ist;

wobei, vorausgesetzt, dass die dreidimensionale Zielanzeigeeinrichtung (60) einen größeren Disparitätsbereich zur Darstellung salienter Elemente als die dreidimensionale Referenzanzeigeeinrichtung aufweist, der Anleiter so eingerichtet ist, dass er die Zieldisparitätsabbildung, die eine gewichtete Addition der Referenz-Disparitätsabbildungsdaten und einer linearen Disparitätsabbildung innerhalb des größeren Disparitätsbereichs einschließt, ableitet; und wobei die Charakteristiken der dreidimensionalen Referenzanzeigeeinrichtung eine(einen) der folgenden umfassen:

- Unschärfe-Disparitätskurve,
- Schärfe-Disparitätskurve,
- Unschärfe-Disparitätsbereich,
- Schärfe-Disparitätsbereich,
- einen Salient-Disparitätsbereich,
- Schärfe-Disparitätsdaten, die für einen Disparitätsbereich bezeichnend sind, der zur Darstellung dreidimensionaler Bilder mit einer Schärfe oberhalb einer vorgegebenen Schärfemetrik geeignet ist, und/oder
- Unschärfe-Disparitätsdaten, die für einen Disparitätsbereich bezeichnend sind, der zur Darstellung dreidimensionaler Bilder mit einer Unschärfe unterhalb eines vorgegebenen Unschärfemaßes geeignet ist.

7. System nach Anspruch 6, wobei die Zieldisparitätsabbildung

$$\text{target\_disparity\_mapping}(x) \text{ entspricht, und wobei die } \text{target\_disparity\_mapping}(x) =$$

$$((\text{l-beta}) \cdot \text{reference\_disparity\_mapping}(x)) +$$

$$(\text{beta} \cdot \text{linear\_approximation\_reference\_disparity\_mapping}(x))$$

und wobei
reference_disparity_mapping(x) der Referenz-Disparitätsabbildung für x entspricht und linear_approximation_ref_disparity(x) einer linearen Disparitätsabbildung durch die Punkte (xmin, reference_disparity_mapping(xmin)) und
(xmax, reference_disparity_mapping(xmax)) entspricht.

8. System nach Anspruch 6, wobei die Referenz-Disparitätsabbildung unter Verwendung von Charakteristiken der dreidimensionalen Referenzanzeigeeinrichtung erzeugt wird, so dass die Referenz-Disparitätsabbildung die Disparität salienter Elemente in den dreidimensionalen Videodaten auf einen vorgegebenen Disparitätsbereich der dreidimensionalen Referenzanzeigeeinrichtung abbildet, die zur Darstellung der salienten Elemente geeignet ist.

9. System nach einem der Ansprüche 6-8, wobei das dreidimensionale Videosignal weiterhin die von dem Ableiter (40) verwendeten Charakteristiken der dreidimensionalen Referenzanzeigeeinrichtung umfasst.

10. Dreidimensionale Anzeigeeinrichtung mit einem der Systeme nach den Ansprüchen 6-8.

11. Supra-System mit einem der Systeme nach den Ansprüchen 6-8, wobei das Supra-System weiterhin ein System zur Erzeugung eines dreidimensionalen Videosignals umfasst, wobei das System zur Erzeugung des dreidimensionalen Videosignals umfasst:

- einen Empfänger (120), der zum Empfang dreidimensionaler, zur Ansteuerung der Multiview-Anzeigeeinrichtung geeigneter Videodaten eingerichtet ist,
- eine Erfassungseinheit (130), die zur Erfassung von Charakteristiken der dreidimensionalen Referenzanzeigeeinrichtung eingerichtet ist,
- einen ersten Generator (140), der zur Erzeugung der Referenz-Disparitätsabbildungsdaten eingerichtet ist, wobei die Referenz-Disparitätsabbildungsdaten für die Disparitätsabbildung für die dreidimensionalen Videodaten für die dreidimensionale Referenzanzeigeeinrichtung bezeichnend sind; sowie
- einen zweiten Generator (150), der zur Erzeugung des dreidimensionalen Videosignals eingerichtet ist, wobei das Erzeugen des dreidimensionalen Videosignals das Kombinieren der dreidimensionalen Videodaten und der Referenz-Disparitätsabbildungsdaten umfasst.

12. Computerprogramm zur Retargetierung eines dreidimensionalen Videosignals, wobei das Computerprogramm Instruktionen umfasst, die, wenn das Programm durch einen Computer ausgeführt wird, bewirken, dass der Computer eines der Verfahren nach den Ansprüchen 1-3 ausführt.

13. Computerlesbarer Datenträger, auf dem das Computerprogramm nach Anspruch 12 gespeichert ist.

**Revendications**

1. Procédé de reciblage de données de signal de vidéo tridimensionnelle pour l'utilisation sur un dispositif d'affichage tridimensionnel cible (60), le procédé comprenant :

   - la réception (401) du signal de vidéo tridimensionnelle, le signal de vidéo tridimensionnelle comprenant :
   - des données de vidéo tridimensionnelle appropriées pour exciter un dispositif d'affichage à vues multiples,
   - des données de mappage de disparité de référence, les données de mappage de disparité de référence étant indicatives d'un mappage de disparité pour les données de vidéo tridimensionnelle pour un dispositif d'affichage tridimensionnel de référence ;
   - la dérivation (402) d'un mappage de disparité cible en fonction du mappage de disparité cible de référence et de caractéristiques du dispositif d'affichage tridimensionnel de référence et de caractéristiques correspondantes du dispositif d'affichage tridimensionnel cible (60),
   - le reciblage (403) des données de vidéo tridimensionnelle en utilisant les données de mappage de disparité cible en des données de vidéo tridimensionnelle cible,

   dans lequel, à condition que le dispositif d'affichage tridimensionnel cible (60) possède une plage de disparité plus grande, pour afficher des éléments saillants, que le dispositif d'affichage tridimensionnel de référence, la dérivation (402) du mappage de disparité cible comprend une addition pondérée des données de mappage de disparité de référence et d'un mappage de disparité linéaire au sein de la plage de disparité plus grande ; et les caractéristiques du dispositif d'affichage tridimensionnel de référence comprennent l'une parmi :

   - une courbe de disparité de flou,
   - une courbe de disparité de netteté,
   - une plage de disparité de flou,
   - une plage de disparité de netteté,
   - une plage de disparité saillante,
   - des données de disparité de netteté indicatives d'une plage de disparité appropriée pour afficher des images tridimensionnelles avec une netteté supérieure à une mesure de netteté prédéterminée, et/ou
   - des données de disparité de floue indicatives d'une plage de disparité appropriée pour afficher des images tridimensionnelles avec un flou inférieur à une mesure de flou prédéterminée.

2. Procédé selon la revendication 1, dans lequel le mappage de disparité cible correspond à

   correspond à target_disparity_mapping(x) et dans lequel target_disparity_mapping(x) =

   $$((1\text{-beta})\ reference\_disparity\_mapping(x)) +$$

   $$(beta\ linear\_approximation\_reference\_disparity\_mapping(x))$$

   et dans lequel

   reference_disparity_mapping(x) correspond au mappage de disparité cible de référence pour x et linear_approximation_ref_disparity(x) correspond à un mappage de disparité linéaire à travers les points (dmin, reference_disparity_mapping(dmin)) et
   (dmax, reference_disparity_mapping(dmax)).

3. Procédé selon la revendication 1, dans lequel le mappage de disparité cible de référence est généré en utilisant des caractéristiques du dispositif d'affichage tridimensionnel de référence, de telle sorte que le mappage de disparité cible de référence mappe la disparité d'éléments saillants dans les données de vidéo tridimensionnelle sur une plage de disparité prédéterminée du dispositif d'affichage tridimensionnel de référence appropriée pour représenter lesdits éléments saillants.

4. Procédé selon l'une quelconque des revendications 1 à 3, dans lequel le signal de vidéo tridimensionnelle comprend en outre les caractéristiques du dispositif d'affichage tridimensionnel de référence utilisées dans la dérivation.

5. Procédé selon l'une quelconque des revendications 1 à 3, comprenant en outre la génération du signal de vidéo tridimensionnelle par :

- l'obtention de données de vidéo tridimensionnelle appropriées pour exciter le dispositif d'affichage à vues multiples,

- l'obtention des caractéristiques du dispositif d'affichage tridimensionnel de référence,

- la génération des données de mappage de disparité de référence, les données de mappage de disparité de référence étant indicatives du mappage de disparité pour les données de vidéo tridimensionnelle pour le dispositif d'affichage tridimensionnel de référence et

- la génération du signal de vidéo tridimensionnelle, dans lequel la génération du signal de vidéo tridimensionnelle comprend la combinaison des données de vidéo tridimensionnelle et des données de mappage de disparité de référence.

6. Système pour recibler un signal de vidéo tridimensionnelle pour l'utilisation sur un dispositif d'affichage tridimensionnel cible (60), le système comprenant :

- un récepteur (30) agencé pour recevoir le signal de vidéo tridimensionnelle, le signal de vidéo tridimensionnelle comprenant :
- des données de vidéo tridimensionnelle appropriées pour exciter un dispositif d'affichage à vues multiples, et
- des données de mappage de disparité de référence, les données de mappage de disparité de référence étant indicatives d'un mappage de disparité pour les données de vidéo tridimensionnelle pour un dispositif d'affichage tridimensionnel de référence ;
- un dérivateur (40) agencé pour dériver un mappage de disparité cible en fonction du mappage de disparité cible de référence et de caractéristiques du dispositif d'affichage tridimensionnel de référence et de caractéristiques correspondantes du dispositif d'affichage tridimensionnel cible (60) ; et
- un convertisseur (50) agencé pour recibler les données de vidéo tridimensionnelle en utilisant les données de mappage de disparité cible en des données de vidéo tridimensionnelle cible ;

dans lequel, à condition que le dispositif d'affichage tridimensionnel cible (60) possède une plage de disparité plus grande, pour afficher des éléments saillants, que le dispositif d'affichage tridimensionnel de référence, le dérivateur est agencé pour dériver le mappage de disparité cible impliquant une addition pondérée des données de mappage de disparité de référence et d'un mappage de disparité linéaire au sein de la plage de disparité plus grande ;
et les caractéristiques du dispositif d'affichage tridimensionnel de référence comprennent l'une parmi :

- une courbe de disparité de flou,
- une courbe de disparité de netteté,
- une plage de disparité de flou,
- une plage de disparité de netteté,
- une plage de disparité saillante,
- des données de disparité de netteté indicatives d'une plage de disparité appropriée pour afficher des images tridimensionnelles avec une netteté supérieure à une mesure de netteté prédéterminée, et/ou
- des données de disparité de floue indicatives d'une plage de disparité appropriée pour afficher des images tridimensionnelles avec un flou inférieur à une mesure de flou prédéterminée.

7. Système selon la revendication 6, dans lequel le mappage de disparité cible correspond à

$$\text{correspond à target\_disparity\_mapping(x) et dans lequel target\_disparity\_mapping(x) =}$$

$$((1\text{-beta}) \text{ reference\_disparity\_mapping(x)}) +$$

$$(\text{beta linear\_approximation\_reference\_disparity\_mapping(x)})$$

et dans lequel
reference_disparity_mapping(x) correspond au mappage de disparité cible de référence pour x et linear_approximation_ref_disparity(x) correspond à un mappage de disparité linéaire à travers les points (xmin, reference_disparity_mapping(xmin)) et (xmax, référence_disparity_mapping(xmax)).

8. Système selon la revendication 6, dans lequel le mappage de disparité cible de référence est généré en utilisant des caractéristiques du dispositif d'affichage tridimensionnel de référence, de telle sorte que le mappage de disparité cible de référence mappe la disparité d'éléments saillants dans les données de vidéo tridimensionnelle sur une plage de disparité prédéterminée du dispositif d'affichage tridimensionnel de référence appropriée pour représenter lesdits éléments saillants.

9. Système selon l'une quelconque des revendications 6 à 8, dans lequel le signal de vidéo tridimensionnelle comprend en outre les caractéristiques du dispositif d'affichage tridimensionnel de référence utilisées par le dérivateur (40).

10. Dispositif d'affichage tridimensionnel, comprenant l'un quelconque des systèmes selon la revendication 6 à 8.

11. Supra-système comprenant l'un quelconque des systèmes selon les revendications 6 à 8, le supra-système comprenant en outre un système pour générer un signal de vidéo tridimensionnelle, le système pour générer le signal de vidéo tridimensionnelle comprenant :

   - un récepteur (120) agencé pour recevoir des données de vidéo tridimensionnelle appropriées pour exciter le dispositif d'affichage à vues multiples,
   - une unité d'acquisition (130) agencée pour acquérir des caractéristiques du dispositif d'affichage tridimensionnel de référence,
   - un premier générateur (140) agencé pour générer les données de mappage de disparité de référence, les données de mappage de disparité de référence étant indicatives du mappage de disparité pour les données de vidéo tridimensionnelle pour le dispositif d'affichage tridimensionnel de référence, et
   - un second générateur (150) agencé pour générer le signal de vidéo tridimensionnelle, dans lequel la génération du signal de vidéo tridimensionnelle comprend la combinaison des données de vidéo tridimensionnelle et des données de mappage de disparité de référence.

12. Programme d'ordinateur pour recibler un signal de vidéo tridimensionnelle, le programme d'ordinateur comprenant des instructions qui, lorsque le programme est exécuté par un ordinateur, font en sorte que l'ordinateur exécute l'un quelconque des procédés selon les revendications 1 à 3.

13. Support de données lisible par ordinateur possédant, stocké sur celui-ci, le programme d'ordinateur selon la revendication 12.

Reference ASD

FIG. 1

Target ASD

FIG. 2

FIG. 3

```
┌─────────────────┐
│                 │
│      401        │
│                 │
└─────────────────┘
         │
         ▼
┌─────────────────┐
│                 │
│      402        │
│                 │
└─────────────────┘
         │
         ▼
┌─────────────────┐
│                 │
│      403        │
│                 │
└─────────────────┘
```

# FIG. 4

```
┌─────────────────┐
│                 │
│      501        │
│                 │
└─────────────────┘
         │
         ▼
┌─────────────────┐
│                 │
│      502        │
│                 │
└─────────────────┘
         │
         ▼
┌─────────────────┐
│                 │
│      503        │
│                 │
└─────────────────┘
         │
         ▼
┌─────────────────┐
│                 │
│      504        │
│                 │
└─────────────────┘
```

# FIG. 5

FIG. 6

FIG. 7

Depth map value
[0 ... 255]

Input disparity
[d_min ... d_max]

Output disparity

Display disparity
(after alpha scaling)

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012162200 A

- US 2103069934 A

**Non-patent literature cited in the description**

- **ALI BORJI et al.** *Salient Object Detection: A Benchmark, http://ilab.usc.edu/-borji/papers/paperBorji.pdf*